# EUROPEAN PATENT SPECIFICATION

(11) **EP 2 708 779 B1**
(45) Date of publication and mention of the grant of the patent: **19.06.2019**
(21) Application number: 13164926.1
(22) Date of filing: 23.04.2013
(51) Int. Cl.: F16H 61/04, F16H 63/38, F16H 63/18

(54) **Transmission apparatus and vehicle**
Getriebevorrichtung und Fahrzeug
Appareil de transmission et véhicule

(30) Priority: 14.09.2012 JP 2012203309
(43) Date of publication of application: 19.03.2014
(73) Proprietor: Yamaha Hatsudoki Kabushiki Kaisha, Iwata-shi, Shizuoka 438-8501 (JP)
(72) Inventor: Shibasaki, Shouji, Iwata-shi, Shizuoka 438-8501 (JP)
(74) Representative: Grünecker Patent- und Rechtsanwälte PartG mbB

(56) References cited:
- JP-A- 2010 078 117
- US-A1- 2008 081 725
- US-A1- 2008 236 316

## Description

The present invention relates to a transmission apparatus according to the preamble of independent claim 1. Moreover, the present invention also relates to a vehicle with a transmission apparatus, and in particular relates to a control of a transmission apparatus of a dog clutch. Such a transmission apparatus can be taken from the prior art document US 2008/236316 A1.

Conventionally, there has been known a two-wheeled motor vehicle that has a transmission mechanism of a dog clutch and performs a shift operation, using an actuator.

A transmission mechanism of a dog clutch includes a gear having a dog portion and mounted on a shaft so as to be relatively rotatable but not movable in the axial direction, and a selector having a dog portion and mounted on the shaft so as to be movable in the axial direction but not relatively rotatable. With such a transmission mechanism, at a time of shifting, engagement between the dog portions of a gear and a selector before shifting is released (dog disengagement), and the dog portions of a gear and a selector after the shifting is engaged (dog engagement). Before establishment of dog engagement, the dog portions of the gear and selector after the shifting may collide against each other (dog abutment).

JP 2010-78117 A describes execution of third control to make no output from a motor at time t30 to t40, at which dog engagement involving a gear level after shifting is completed, for reduction of a sound, and the like, made in establishing dog engagement. This document further describes execution of fourth control at subsequent time t40 to t50 to make a small output from the motor. The fourth control is executed to reliably establish dog engagement when dog portions are not engaged with each other and a shift drum does not reach a predetermined rotation position.

When the dog portions of a gear and a selector after shifting are pressed onto each other in the axial direction by a drive force of an actuator at occurrence of dog abutment, relative rotation is hindered by a friction force caused between the dog portions, which may possibly delay establishment of dog engagement.

A case in which "dog portions are not engaged with each other and a shift drum does not reach a predetermined rotation position" in JP 2010-78117 A refers to the above mentioned dog abutment, which occurs at time t30, as being judged from the broken line A in the diagram. Further, at time t30, a drive signal having a duty ratio Da (85 to 100%) for movement of a shift folk is given to the motor. That is, in JP 2010-78117 A, the dog portions are pressed onto each other by a drive force of the actuator at occurrence of dog abutment, and therefore, it is concluded that the technology disclosed in this document has a problem of delay in establishment of dog engagement.

As a support of this conclusion, dog abutment is not released at time t30 to t40, at which third control is executed to make no output from the motor, and thereafter released for the first time at time t40 to t50, at which fourth control is executed. This means that dog abutment cannot be readily released after once pressing the dog portions onto each other by a drive force of the actuator at occurrence of dog abutment, even though the drive force of the actuator is made zero, as a difference in the rotation frequency between the gear and the dog clutch is small.

The present invention has been conceived in view of the above described situation, and an object thereof is to provide a transmission apparatus and a vehicle capable of promptly completing dog engagement despite occurrence of dog abutment.

According to the present invention said object is solved by a transmission apparatus having the features of independent claim 1. Preferred embodiments are laid down in the dependent claims.

In order to achieve the above described object, a transmission apparatus according to the present invention includes a gear unit, a shift drum, a shift mechanism for rotating the shift drum, an actuator for driving the shift mechanism, and a control device for controlling the actuator. The gear unit has a drive shaft, a driven shaft, a plurality of gears each having a dog portion and respectively mounted on the drive shaft and the driven shaft so as to be relatively rotatable but not movable in an axial direction, and a plurality of selectors each having a dog portion and respectively mounted on the drive shaft and the driven shaft so as to be movable in the axial direction but not relatively rotatable, in which a pair of a gear and a selector of which dog portions are engaged with each other constitutes a driveline path extending from the drive shaft to the driven shaft. The shift drum switches the pairs of the gear and the selector of which dog portions are engaged with each other by moving the selector in the axial direction. The shift mechanism has a segment having a plurality of mountain portions and a plurality of valley portions alternately formed along a periphery thereof, and mounted so as to integrally rotate with the shift drum, a follower in contact with the periphery of the segment, and urging means for urging the follower onto a rotation axis of the segment. The rotation angle of the shift drum with the follower positioned on the valley portion formed on the periphery of the segment constitutes a rotation angle at which the dog portions of the gear and the selector are engaged with each other. While the shift drum rotates from a rotation angle at which the dog portions of a gear and of a selector relevant to a pair before shifting are engaged with each other to a rotation angle at which the dog portions of a gear and of a selector relevant to a pair after the shifting are engaged with each other, the control device executes stop control to stop the actuator during a period after the rotation angle of the shift drum passes a rotation angle with the follower positioned on the mountain portion formed on the periphery of the segment before the rotation angle reaches a collision rotation angle at which the dog portions of the gear and the selector relevant to the pair after the shifting collide against each other.

A vehicle according to the present invention has the above described transmission apparatus.

According to the present invention, when driving the shift mechanism is stopped during a period after the shift drum passes the intermediate rotation angle before the rotation angle reaches the collision rotation angle, the shift drum rotates to the second rotation angle thanks to a force by an urging means. That is, as dog portions are not pressed onto each other by a force by the actuator, it is possible to promptly complete dog engagement even though dog abutment is caused.
FIG. 1 is a side view of a two-wheeled motor vehicle;
FIG. 2 is a schematic diagram of a gear unit;
FIG. 3 explains dog disengagement, dog abutment, and dog engagement;
FIG. 4 is a cross sectional view of a shift mechanism;
FIG. 5 is a side view of the sift mechanism;
FIG. 6 explains a rotation angle of a shift drum, referring to a segment;
FIG. 7 explains the rotation angle of the shift drum, referring to a shift groove;
FIG. 8 is a block diagram showing an example structure of a transmission apparatus;
FIG. 9 is a block diagram showing an example structure of a control device; and
FIG. 10 is a timing chart showing an example operation of the control device.

An embodiment of a transmission apparatus and a vehicle according to the present invention will be described referring to the drawings.

As a vehicle according to the present invention, a straddled-type vehicle for a user to sit on a seat thereof while straddling, such as, for example, a two-wheeled motor vehicle (including a scooter), an all terrain vehicle, a snowmobile, and so forth, are preferable. In the following, an embodiment employing a two-wheeled motor vehicle as a vehicle according to the present invention will be described.

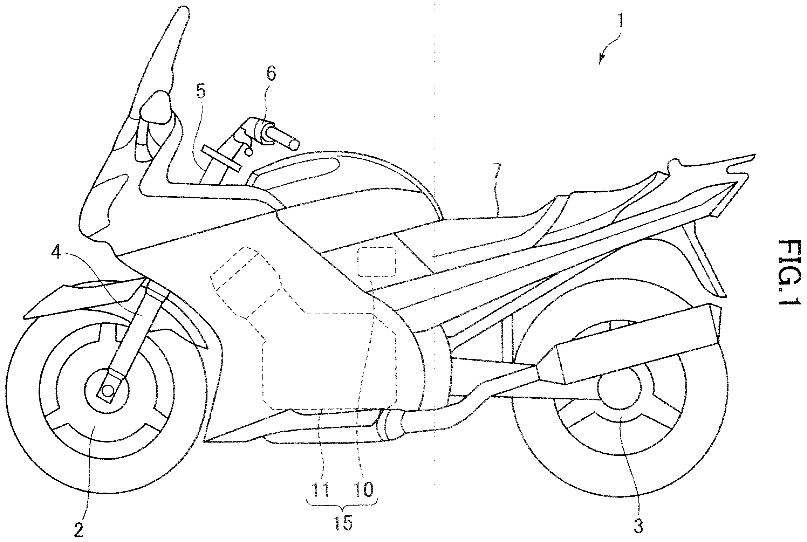

FIG. 1 is a side view of a two-wheeled motor vehicle 1 according to one aspect of the present invention. The two-wheeled motor vehicle 1 has an engine unit 11. A front wheel 2 is mounted ahead of the engine unit 11, while a rear wheel 3 is mounted behind the engine unit 11. The front wheel 2 is supported by the lower end of a front fork 4, while a steering shaft 5 is connected to the upper portion of the front fork 4, being rotatably supported in the frontmost part of a vehicle frame (not shown) . A steering 6 is mounted at the top of the steering shaft 5. The steering 6, the front fork 4, and the front wheel 2 are integrally rotatable in the left-right direction with the steering shaft 5 as the center. A seat 7 for a driver to sit on while straddling is mounted behind the steering 6. Torque output from the engine unit 11 is transmitted via a torque transmission member (not shown), such as a chain, a belt, a shaft, and so forth, to the rear wheel 3. The two-wheeled motor vehicle 1 further has a control device 10. The engine unit 11 and the control device 10 constitute a transmission apparatus 15 according to one aspect of the present invention.

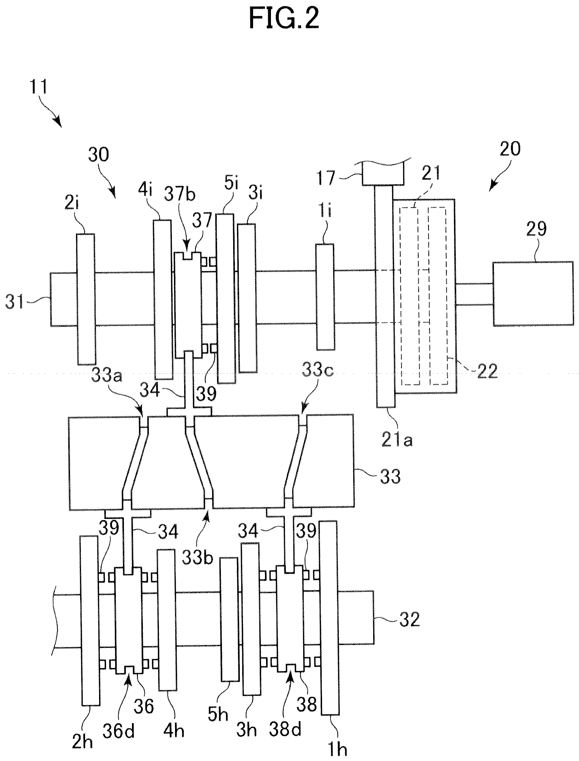

FIG. 2 schematically shows a gear unit 30. The engine unit 11 has a clutch 20 and a gear unit 30. The clutch 20 is mounted on an end portion of a drive shaft 31 of the gear unit 30, for transmitting/disconnecting torque from a crank shaft (not shown) to the gear unit 30. A driven shaft 32 of the gear unit 30 is connected to the axle of the rear wheel 3 via the torque transmission member (not shown), such as a chain, a belt, a shaft, and so forth.

The clutch 20 has a driving member 21 capable of relative rotation relative to the drive shaft 31 of the gear unit 30. The driving member 21 has a primary gear 21a engaged with a primary gear 17 mounted on the crank shaft (not shown) . The clutch 20 has a following member 22 incapable of relative rotation relative to the drive shaft 31 of the gear unit 30. The driving member 21 and the following member 22 are pressed onto each other, whereby torque is transmitted between the driving member 21 and the following member 23. The clutch 20 is, for example, a multiple disks friction clutch.

The clutch 20 further has a clutch actuator 29 for changing the engaged state between the driving member 21 and the following member 22 according to an instruction from the control device 10. The clutch actuator 29 includes, for example, an electric motor. A drive force of the clutch actuator 29 is transmitted by means of oil pressure or via a rod to either one of the driving member 21 and the following member 22 of the clutch 20 to control a pressing force between the driving member 21 and the following member 22.

The gear unit 30 has a plurality of gears 1i to 5i mounted on the drive shaft 31 and a plurality of gears 1h to 5h mounted on the driven shaft 32. The gears 1i and 1h are engaged with each other with a reduction ratio corresponding to the 1^{st} gear level. The gears 2i and 2h are engaged with each other with a reduction ratio corresponding to the 2^{nd} gear level. The gears 3i and 3h are engaged with each other with a reduction ratio corresponding to the 3^{rd} gear level. The gears 4i and 4h are engaged with each other with a reduction ratio corresponding to the 4^{th} gear level. The gears 5i and 5h are engaged with each other with a reduction ratio corresponding to the 5^{th} gear level. Each of the gears 1i to 5i, 1h to 5h is mounted not movable in the axial direction relative to the drive shaft 31 and the driven shaft 32.

In each of the gear pairs corresponding to the respective gear levels, one gear is an idling gear capable of relative rotation relative to the shaft on which the gear is mounted, while the other gear is a stationary gear not capable of relative rotation relative to the shaft on which the gear is mounted. An idling gear can rotate at a speed different from that of the shaft on which that idling gear is mounted, while a stationary gear can integrally rotate with the shaft on which that shaft is mounted at a speed same as that of the shaft. In this embodiment, the gears 1h to 4h, 5i are idling gears, while the gears 1i to 4i, 5h are stationary gears. That is, of the gears 1i to 5i mounted on the drive shaft 31, the gear 5i, or an idling gear, mounted on the drive shaft 31 is relatively rotatable, while the gears 1i to 4i, or stationary gears, mounted on the drive shaft 31 are not relatively rotatable. Of the gears 1h to 5h mounted on the driven shaft 32, the gears 1h to 4h, or idling gears, mounted on the driven shaft 32 are relative rotatable, while the gear 5h, or a stationary gear, mounted on the driven shaft 32 is not relatively rotatable.

In the description below, the gears 1h to 4h, 5i, or idling gears, are referred to also as "idling gears 1h to 4h, 5i", while the gears 1i to 4i, 5h, or stationary gears, as "stationary gears 1i to 4i, 5h" .

The gear unit 30 further has selectors 36 to 38 not capable of relative rotation relative to the drive shaft 31 and the driven shaft 32 but movable in the axial direction. The selectors 36 to 38 rotate integrally with the shaft on which the selectors 36 to 38 are mounted at the same speed as that of the shaft. The selectors 36 to 38 are positioned adjacent to the idling gears 1h to 4h, and 5i. Specifically, the selector 37 mounted on the drive shaft 31 is positioned adjacent to the gear 5i. The selector 36 mounted on the driven shaft 32 is positioned between the gears 2h and 4h. The selector 38 mounted on the driven shaft 32 is positioned between the gears 1h and 3h. An engaging groove 36d, 37d, 38d is formed on each selector 36 to 38 for engagement with the shift fork 34.

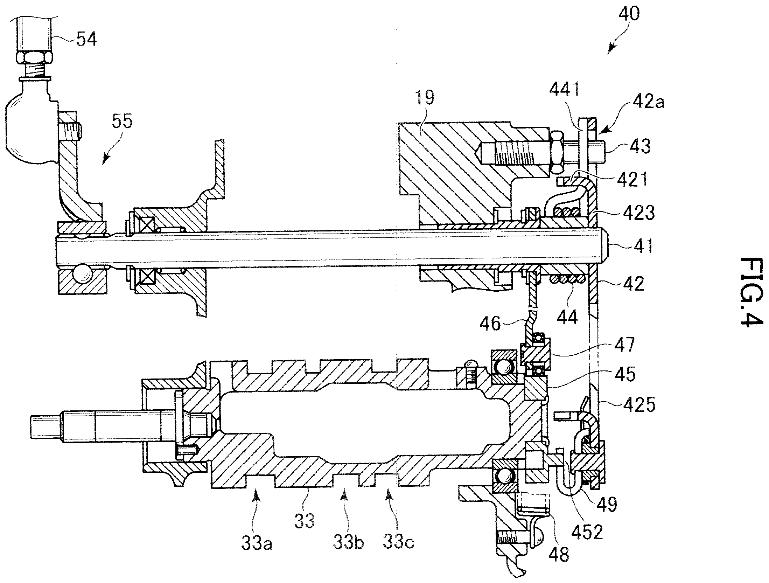

The transmission apparatus 15 has a shift drum 33. The shift drum 33 has a plurality of cam grooves 33a to 33c formed thereon of which positions in the axial direction vary depending on the rotation angle. The shift fork 34 is engaged with the respective groove 33a to 33c. The shift drum 33 is connected to a shift actuator (not shown) via a shift mechanism to be described later (see FIG. 4), and rotates upon receipt of mainly a drive force of the shift actuator. Rotation of the shift drum 33 is converted into movement in the axial direction of the shift fork 34 engaged with the respective cam groove 33a to 33c. With the above, the selectors 36 to 38 move in the axial direction.

The idling gears 1h to 4h, 5i and the selectors 36 to 38 can be engaged with each other on the dog portions 39 thereof. Specifically, dog portions 39 are formed on the respective lateral surfaces of the idling gears 1h to 4h, 5i so as to project toward the selectors 36 to 38, and dog portions 39 are formed on the respective lateral surfaces of the selectors 36 to 38 so as to project toward the idling gears 1h to 4h, 5i. Note that "to project" refers to a relative positional relationship in the axial direction between a part with the dog portions 39 formed thereon being aligned in the circumferential direction and a part without the dog portions 39. For example, in a case where a concave portion that is recessed relative to the remaining part is formed on the lateral surface of each idling gear 1h to 4h, 5i or each selector 36 to 38, a part without the concave portion constitutes the dog portion 39. When the dog portions 39 are engaged with each other, a driveline path is formed extending from the drive shaft 31 to the driven shaft 32. For example, when the dog portion 39 of the selector 38 is engaged with the dog portion 39 of the gear 1h, rotation of the drive shaft 31 is transmitted from the gear 1i to the driven shaft 32 via the gear 1h and the selector 38.

In shifting the gear levels, a state in which the idling gear 1h to 4h, 5i and the selector 36 to 38 relative to a pair before shifting are engaged with each other is shifted to a state in which the idling gear 1h to 4h, 5i and the selector 36 to 38 relative to a pair after the shifting are engaged. For example, in shifting from the 5^{th} gear level to the 4^{th} gear level, the selector 37 moves away from the gear 5i, whereby engagement between the selector 37 and the gear 5i relative to a pair before shifting is released (dog disengagement), and the selector 36 thereafter moves toward the gear 4h, whereby the selector 36 and the gear 4h relative to a pair after the shifting are engaged (dog engagement) . In shifting from the 4^{th} gear level to the 3^{rd} gear level, the selector 36 moves away from the gear 4h, whereby engagement between the selector 36 and the gear 4h relative to a pair before shifting is released, and the selector 38 thereafter moves toward the gear 3h, whereby the selector 38 and the gear 3h relative to a pair after the shifting are engaged. In shifting from the 3^{rd} gear level to the 2^{nd} gear level, the selector 38 moves away from the gear 3h, whereby engagement between the selector 38 and the gear 3h relative to a pair before shifting is released, and the selector 36 thereafter moves toward the gear 2h, whereby the selector 36 and the gear 2h relative to a pair after the shifting are engaged. In shifting from the 2^{nd} gear level to the 1^{st} gear level, the selector 36 moves away from the gear 2h, whereby engagement between the selector 36 and the gear 2h relative to a pair before shifting is released, and the selector 38 thereafter moves toward the gear 1h, whereby the selector 36 and the gear 1h relative to a pair after the shifting are engaged.

Although a selector relative to a pair before shifting differs from a selector relative to a pair after the shifting according to the above described aspect, this is not limiting, and a selector relative to a pair before shifting may be the same as a selector relative to a pair after the shifting.

In the following, shifting from the 2^{nd} gear level to the 1^{st} gear level will be described in more detail. In dog disengagement, when the selector 36 moves away from the gear 2h relative to a pair before shifting, engagement between the dog portion 39 of the selector 36 and the dog portion 39 of the gear 2h is released. In dog engagement, when the selector 38 moves toward the gear 1h relative to a pair after the shifting, engagement between the dog portion 39 of the selector 38 and the dog portion 39 of the gear 1h is completed. The dog portion 39 of the selector 38 and the dog portion 39 of the gear 1h may collide against each other before establishing dog engagement, which is referred to as dog abutment.

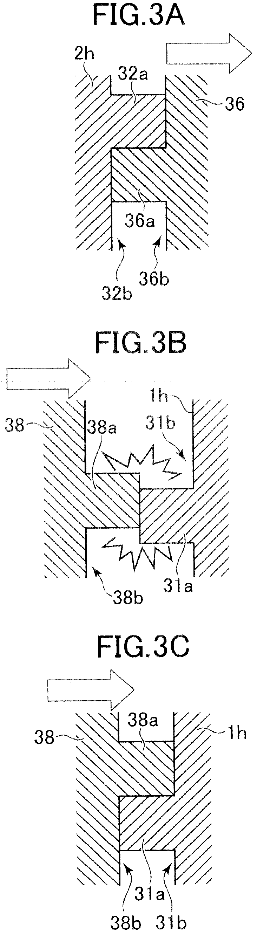

FIG. 3 explains dog disengagement, dog abutment, and dog engagement. FIG. 3(A) shows dog disengagement; FIG. 3(B) shows dog abutment; FIG. 3(C) shows dog engagement. These diagrams are schematic diagrams in which the rotation direction of the gears 1h, 2h is deployed in the up-down direction of the diagrams, and the arrow indicates the movement direction of the selectors 36, 38.

On the lateral surface of the gear 2h opposite the selector 36, a dog portion 32a projecting in a convex shape toward the selector 36 (39 in FIG. 2) and a concave insertion portion 32b are formed. Similarly, on the lateral surface of the selector 36 opposite the gear 2h as well, a dog portion 36a projecting in a convex shape toward the gear 2h (39 in FIG. 2) and a concave insertion portion 36b are formed. When the dog portion 36a of the selector 36 is inserted into the insertion portion 32b of the gear 2h and the dog portion 32a of the gear 2h is inserted into the insertion portion 36b of the selector 36, the dog portion 36a of the selector 36 is engaged with the dog portion 32a of the gear 2h. With the above, torque is transmitted from one of the selector 36 and the gear 2h to the other via the engaged dog portions 36a, 32a.

On the lateral surface of the selector 38 opposite the gear 1h, a dog portion 38a projecting in a convex shape toward the gear 1h and a concave insertion portion 38b are formed. Similarly, on the lateral surface of the gear 1h opposite the selector 38 as well, a dog portion 31a projecting in a convex shape toward the selector 38 and a concave insertion portion 31b are formed. When the dog portion 38a of the selector 38 is inserted into the insertion portion 31b of the gear 1h and the dog portion 31a of the gear 1h is inserted into the insertion portion 38b of the selector 38, the dog portion 38a of the selector 38 is engaged with the dog portion 31a of the gear 1h. With the above, torque is transmitted from one of the selector 38 and the gear 1h to the other via the engaged dog portions 38a, 31a.

In dog disengagement shown in FIG. 3 (A), engagement between the dog portion 36b of the selector 36 and the dog portion 32a of the gear 2h is released. Specifically, a drive force of the shift actuator (not shown) is transmitted form the shift drum 33 (see FIG. 2) to the selector 36, upon which the selector 36 moves away from the gear 2h. Accordingly, the dog portion 36a of the selector 36 is removed from the insertion portion 32b of the gear 2h, and the dog portion 32a of the gear 2h is removed from the insertion portion 36b of the selector 36.

In dog abutment shown in FIG. 3 (B), the dog portion 38a of the selector 38 collides against the dog portion 31a of the gear 1h. That is, in dog abutment, the dog portion 38a of the selector 38 is not inserted into the insertion portion 31b of the gear 1h, but collides against a part other than the insertion portion 31b. In the above, if the dog portions 38a, 31a are pressed onto each other by a drive force of the shift actuator, the relative rotation speed of these members drops, which may possibly delay shifting to dog engagement. Such a problem can be caused due to the clutch 20 being in a disconnected state during a shifting period and absence of a drive force that causes a difference in the rotation frequency between the selector 38 and the gear 1h.

In dog engagement shown in FIG. 3(C), the dog portion 38a of the selector 38 is engaged with the dog portion 31a of the gear 1h. That is, the dog portion 38a of the selector 38 is inserted into the insertion portion 31b of the gear 1h, and the dog portion 31a of the gear 1h is inserted into the insertion portion 38b of the selector 38. Accordingly, the dog portion 38a of the selector 38 contacts the dog portion 31a of the gear 1h in the gear rotation direction.

Note that there is a case in which dog disengagement directly shifts to dog engagement without dog abutment. This is a case in which the dog portion 38a of the selector 38 is directly inserted into the insertion portion 31b without colliding against the dog portion 31a of the gear 1h.

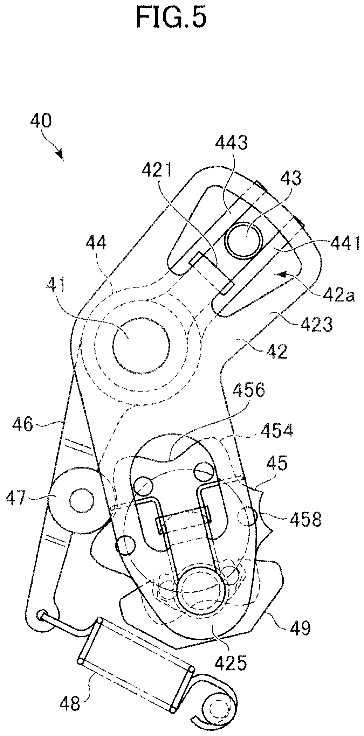

FIGs 4 and 5 are a cross sectional view and a side view of the shift mechanism 40. The shift mechanism 40 rotates the shift drum 33, while receiving a drive force of the shift actuator (not shown) . The shift mechanism 40 has a shift shaft 41 rotatably supported by the engine case 19, of which one end is connected to a shift rod 54 connected to the shift actuator (not shown) via a connection member 55, and the other end has a shift arm 42, a coil spring 44, and a stopper lever 46 mounted thereon.

The shift arm 42 has a first arm 423 and a second arm 425 respectively in a substantial L-shape, and is mounted integrally rotatable with the shift shaft 41. A hole 42a is formed on the first arm 423, for accepting a stopper pin 43 fixed to the engine case 19. The coil spring 44 has a pair of arms 441, 443 extending in the same direction as that in which the first arm 423 of the shift arm 42 extends, with the stopper pin 43 in-between. A manipulator 421 is formed on the first arm 423 of the shift arm 42, and inserted into between the arms 441, 443 of the coil spring 44. When the shift arm 42 rotates, the manipulator 421 of the first arm 423 elastically deforms the coil spring 44 such that one of the arms 441, 443 of the coil spring 44 moves away from the other.

The second arm 425 of the shift arm 42 extends towards the rotation axis of the shift drum 33. A nail portion 49 is formed on the tip end of the second arm 425, being folded toward the shift drum 33. A segment 45 is mounted on an end portion of the shift drum 33. The segment 45 has a plurality of mountain portions 454 and a plurality of valley portions 456 alternately formed on the periphery thereof. The segment 45 further has a plurality of pins 452 formed thereon aligned in the circumferential direction, so that the nail portion 49 of the second arm 425 is engaged with some of the pins 452. When the shift arm 42 rotates, the nail portion 49 of the second arm 425 causes the pin 452 of the segment 45 to move around the rotation axis of the shift drum 33, to thereby rotate the shift drum 33 having the segment 45 mounted thereon.

A follower 47 is mounted halfway the stopper lever 46 so as to be in contact with the periphery of the segment 45. A coil spring 48, as an urging means, is attached to an end portion of the stopper lever 46, and the follower 47 is pressed onto the rotation axis of the shift drum 33 by a force of the coil spring 48. The valley portion 456 of the segment 45 constitutes a position where the follower 47 remains stable. The shift drum 33 rotates such that the follower 47 approaches the valley portion 456 of the segment 45 or stops rotating with the follower 47 positioned in the valley portion of the segment 45, as long as receiving no drive force from the shift actuator (not shown) .

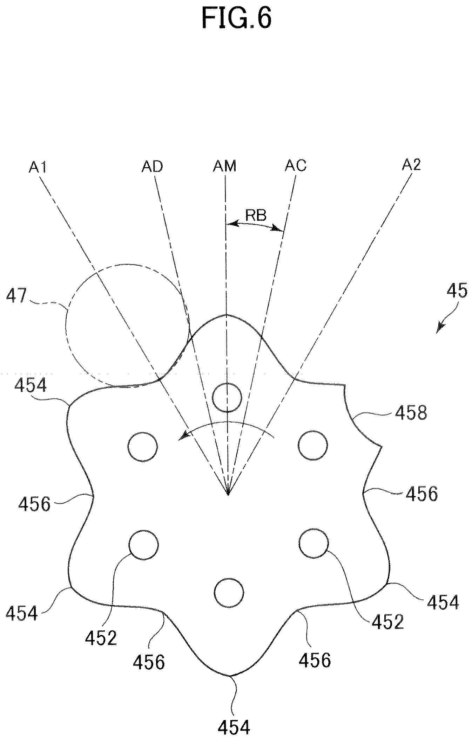

FIG. 6 explains the rotation angle of the shift drum 33, referring to the segment 45. Each valley portion 456 of the segment 45 corresponds to each gear level. That is, the rotation angle of the shift drum 33 with the follower 47 positioned in the valley portion 456 of the segment 45 constitutes a rotation angle with any gear level set in the gear unit 30. When the follower 47 is positioned on a notch 458 of the segment 45, the gear unit 30 is set neutral. In the following, based on an assumption that the idling gear 1h to 4h, 5i and the selector 36 to 38 relative to a pair before shifting are engaged with each other when the shift drum 33 is positioned at the rotation angle A1, and the idling gear 1h to 4h, 5i and the selector 36 to 38 relative to a pair after the shifting are engaged when the shift drum 33 is positioned at the rotation angle A2, the rotation angle of the shift drum 33 will be described in detail.

While the shift drum 33 rotates from the first rotation angle A1 to the second rotation angle A2, the shift drum 33 passes an intermediate rotation angle AM between the first rotation angle A1 and the second rotation angle A2. The intermediate rotation angle AM is a rotation angle of the shift drum 33 with the follower 47 positioned on the mountain portion 454 of the segment 45. When the rotation angle of the shift drum 33 passes the intermediate rotation angle AM, the shift drum 33 can rotate to the rotation angle A2 even without a drive force from the shift actuator (not shown), thanks to a force with which the coil spring 48 shown in FIGs 4 and 5 presses the follower 47 onto the periphery of the segment 45.

While the shift drum 33 rotates from the first rotation angle A1 to the intermediate rotation angle AM, the shift drum 33 passes a release rotation angle AD at which engagement between the idling gear 1h to 4h, 5i and the selector 36 to 38 relevant to a pair before shifting is released. That is, the release rotation angle AD is a rotation angle for dog disengagement, and present halfway the movement of the follower 47 from the valley portion 456 to the mountain portion 454 of the segment 45.

While the shift drum 33 rotates from the intermediate rotation angle AM to the second rotation angle A2, the shift drum 33 passes a collision rotation angle AC at which dog abutment can occur to the idling gear 1h to 4h, 5i and the selector 36 to 38 relevant to a pair after shifting. That is, the collision rotation angle AC is a rotation angle at which dog abutment can be caused, and present halfway the movement of the follower 47 from the mountain portion 454 to the valley portion 456 of the segment 45.

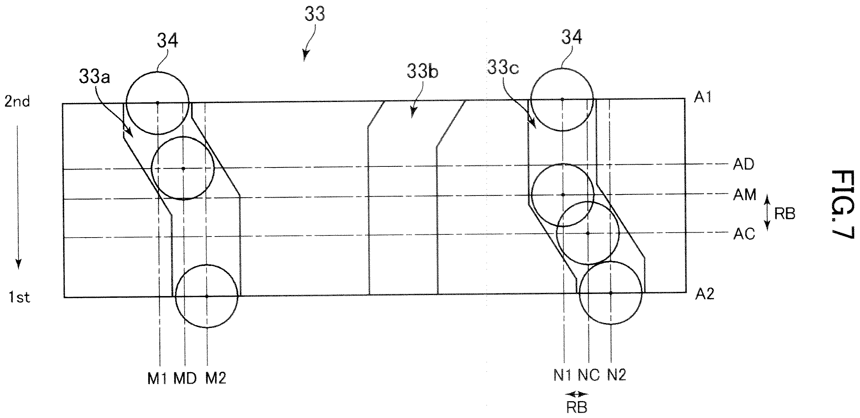

FIG. 7 explains the rotation angle of the shift drum 33, referring to the cam grooves 33a to 33c. The diagram shows a part of the outer circumference of the shift drum 33 relevant to a portion between the 1^{st} gear level and the 2^{nd} gear level, in which the circumferential direction of the shift drum 33 is deployed in the up-down direction of the diagram. In this diagram, while focusing on shifting from the 2^{nd} to 1^{st} gear level, the rotation angle of the shift drum 33 with the 2^{nd} gear level set is referred to as a first rotation angle A1, and that with the 1^{st} gear level set is referred to as a second rotation angle A2.

At the first rotation angle A1 with the 2^{nd} gear level set, the cam groove 33a is formed at the first axial position M1. Thus, the shift fork 34 is positioned at the first axial position M1, which causes the selector 36 to be engaged with the gear 2h.

From the first rotation angle A1 to the intermediate rotation angle AM, the position of the cam groove 33a is shifting_gradually from the first axial position M1 to the second axial position M2. Accordingly, the shift fork 34 is positioned at the second axial position M2, which keeps the selector 36 at a neutral position. That is, when the shift drum 33 rotates from the first rotation angle A1 to the intermediate rotation angle AM, the shift fork 34 moves from the first axial position M1, at which the selector 36 is engaged with the gear 2h, to the second axial position M2, at which the selector 36 is kept at a neutral position. There is defined a release axial position MD between the first axial position M1 and the second axial position M2. The release axial position MD corresponds to the release rotation angle AD, at which engagement between the selector 36 and the gear 2h is released.

From the intermediate rotation angle AM to the second rotation angle A2 with the 1^{st} gear level set, the position of the cam groove 33a remains at the second axial position M2. That is, while the shift drum 33 rotates from the intermediate rotation angle AM to the second rotation angle A2, the selector 36 remains at a neutral position.

Meanwhile, the cam groove 33c is formed at the first axial position N1 at the first rotation angle A1 with the 2^{nd} gear level set. Thus, the shift fork 34 is positioned at the first axial position N1, which keeps the selector 38 at a neutral position.

From the first rotation angle A1 to the intermediate rotation angle AM, the position of the cam groove 33c remains at the first axial position N1. That is, while the shift drum 33 rotates from the first rotation angle A1 to the intermediate rotation angle AM, the selector 38 remains at a neutral position.

From the intermediate rotation angle AM to the second rotation angle A2, the position of the cam groove 33c is shifting gradually from the first axial position N1 to the second axial position N2. Accordingly, the shift fork 34 is positioned at the second axial position N2, which causes the selector 38 to be engaged with the gear 1h. That is, when the shift drum 33 rotates from the intermediate rotation angle AM to the second rotation angle A2, the shift fork 34 moves from the first axial position N1 with the selector 38 kept at a neutral position to the second axial position N2 with the selector 38 engaged with the gear 1h. There is defined a collision axial position NC between the first axial position N1 and the second axial position N2. The collision axial position NC corresponds to the collision rotation angle AC, at which dog abutment can occur to the selector 38 and the gear 1h.

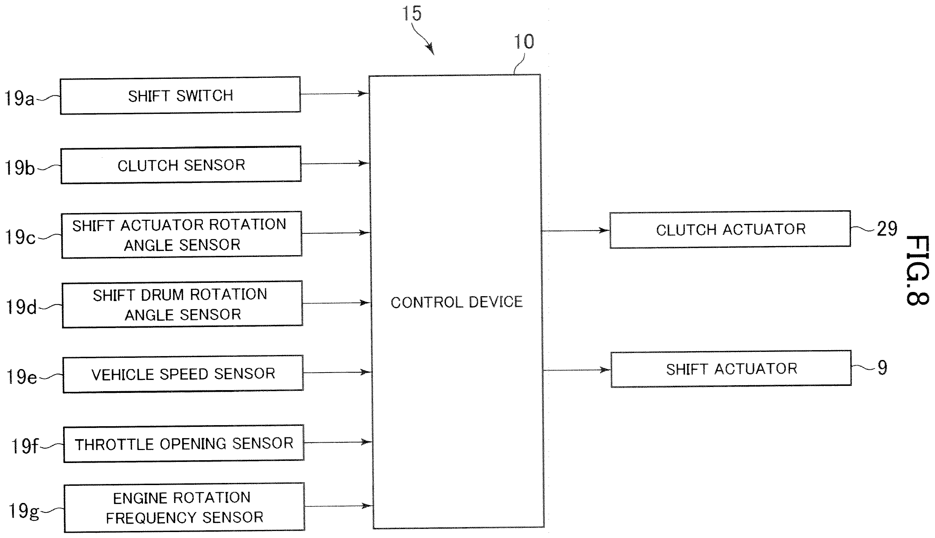

FIG. 8 is a block diagram showing an example structure of the transmission apparatus 15. The transmission apparatus 15 includes a shift switch 19a, a clutch sensor 19b, a shift actuator rotation angle sensor 19c, a shift drum rotation angle sensor 19d, a vehicle speed sensor 19e, a throttle opening sensor 19f, and an engine rotation frequency sensor 19g. These sensors 19a to 19g are connected to the control device 10. The transmission apparatus 15 has a clutch actuator 29 and a shift actuator 9, and these actuators 29, 9 are connected to the control device 10.

The shift switch 19a is a switch for operation by a driver, and outputs a shift instruction (a shift up instruction to shift up a gear level and a shift down instruction to shift down a gear level) to the control device 10. The shift switch 19a includes a shift up switch and a shift down switch.

The clutch sensor 19b includes, for example, a potentiometer for outputting a signal in accordance with the position of a pressure plate (not shown) included in the clutch 20. The control device 10 can determine the state of the clutch 20 (a fully engaged state, a half engaged state, a released state), based on a signal output from the clutch sensor 19b.

The shift actuator rotation angle sensor 19c includes, for example, a potentiometer for outputting a signal in accordance with the rotation angle of the shift actuator 9. The control device 10 can determine the rotation angle of the shift drum 33, based on a signal output from the shift actuator rotation angle sensor 19c.

The shift drum rotation angle sensor 19d includes, for example, a potentiometer for outputting a signal in accordance with the rotation angle of the shift drum 33. The control device 10 can determine the rotation angle of the shift drum 33, based on a signal output from the shift drum rotation angle sensor 19d.

The vehicle speed sensor 19e determines the vehicle speed of the two-wheeled motor vehicle 1, and outputs a vehicle speed signal. The throttle opening sensor 19f determines the throttle opening of the engine unit 11, and outputs a throttle opening signal. The engine rotation frequency sensor 19g determines the engine rotation frequency of the engine unit 11, and outputs an engine rotation frequency signal.

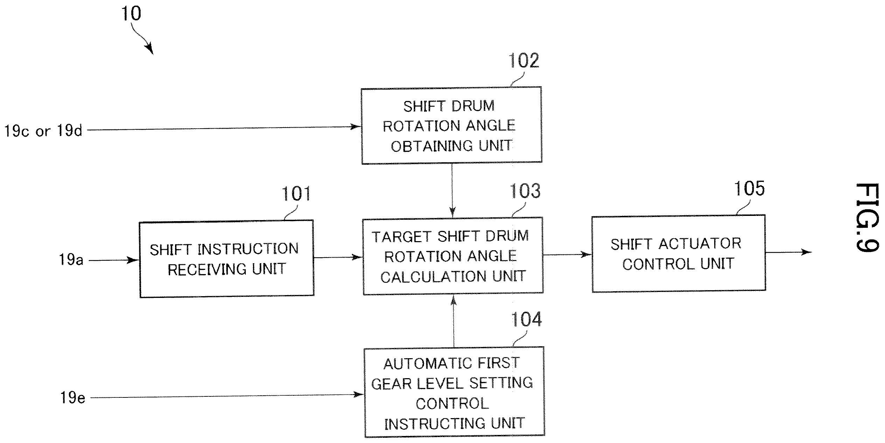

FIG. 9 is a block diagram showing an example structure of the control device 10. The control device 10 includes a shift instruction receiving unit 101, a shift drum rotation angle obtaining unit 102, a target shift drum rotation angle calculation unit 103, an automatic first gear level setting control instructing unit 104, and a shift actuator control unit 105. The respective units of the control device 10 are implemented by the CPU of the control device 10 by executing a program stored in the memory.

The shift instruction receiving unit 101 receives a shift instruction from the shift switch 19a, and outputs to the target shift drum rotation angle calculation unit 103.

The shift drum rotation angle obtaining unit 102 obtains the rotation angle of the shift drum 33, based on a signal output from the shift drum rotation angle sensor 19d, and outputs to the target shift drum rotation angle calculation unit 103. This, however, is not limiting, and the rotation angle of the shift drum 33 may be obtained based on a signal output from the shift actuator rotation angle sensor 19c.

Having received the shift instruction from the control device 101, the target shift drum rotation angle calculation unit 103 calculates a target value (hereinafter referred to as a target shift drum rotation angle) of the rotation angle of the shift drum 33 such that the gear level set in the gear unit 30 is switched to one in accordance with the shift instruction, and outputs to the shift actuator control unit 105.

The automatic first gear level setting control instructing unit 104 receives a vehicle speed signal from the vehicle speed sensor 19e, and determines whether or not the vehicle speed of the two-wheeled motor vehicle 1 falls below a predetermined threshold. When the vehicle speed falls below the threshold, the automatic first gear level setting control instructing unit 104 outputs an automatic first gear level setting control instruction to the target shift drum rotation angle calculation unit 103.

Automatic first gear level setting control refers to gear level shifting control for sequentially shifting a gear level selected in the gear unit 30 toward one with the maximum transmission gear ratio. Having received the automatic first gear level setting control instruction, the target shift drum rotation angle calculation unit 103 calculates a target shift drum rotation angle such that shift-down is sequentially repeated so that the gear level at that time is shifted down to the 1^{st} gear level, and outputs to the shift actuator control unit 105.

During a period of execution of the automatic first gear level setting control, the target shift drum rotation angle calculation unit 103 switches the target shift drum rotation angle to be output to the shift actuator control unit 105 to a target shift drum rotation angle for stop control, which is different from a target shift drum rotation angle for normal control. Normal control and stop control by the shift actuator 9 will be described later in detail.

Having received the target shift drum rotation angle from the target shift drum rotation angle calculation unit 103, the shift actuator control unit 105 generates a drive signal for making the rotation angle of the shift drum 33 be closer to the target shift drum rotation angle, and outputs to the shift actuator 9. The shift actuator control unit 105 includes a pulse width modulator for generating a pulse width modulation (Pulse Width Modulation: PWM) signal, and executes PWM control with respect to the shift actuator 9. This, however, is not limiting, and a voltage in the magnitude in accordance with the target shift drum rotation angle may be supplied to the shift actuator 9.

Besides the above described control, during a shifting period, the control device 10 executes control for driving the clutch actuator 29 so as to leave the clutch 20 in a released state or a half-engaged state, and control for adjusting the throttle opening to increase or decrease the engine rotation frequency.

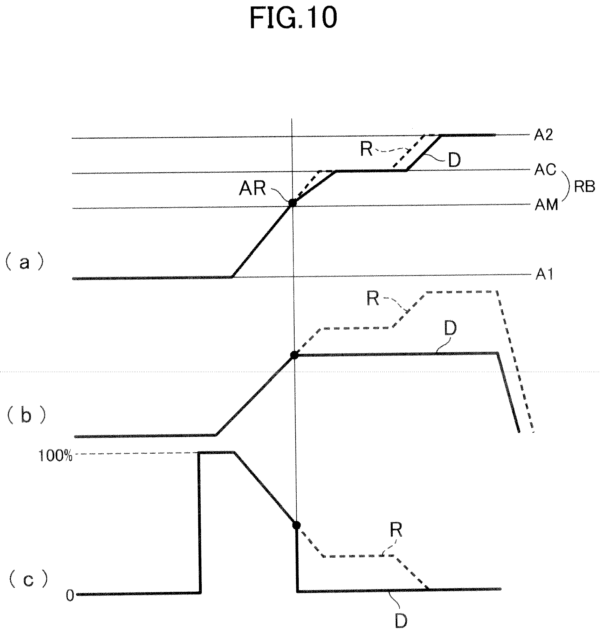

FIG. 10 is a timing chart showing an example operation of the control device 10. Specifically, FIG. 10 shows an example operation of the shift drum 33 and the shift actuator 9 when the shift drum 33 rotates from the first rotation angle A1 to the second rotation angle A1 during a shifting period. The upper diagram (a) shows change as time passes in the rotation angle of the shift drum 33; the middle diagram (b) shows change as time passes in the rotation angle of the shift actuator 9. In the diagrams (a) and (b), the abscissa indicates time, and the ordinate indicates the rotation angle. The lower diagram (c) indicates a duty ratio of a drive signal to be supplied to the shift actuator 9. In the diagram (c), the abscissa indicates time, and the ordinate indicates the duty ratio. In these diagrams, the broken line R relates to normal control, and the solid line D relates to stop control.

For normal control indicated by the broken line R, the control device 10 outputs a drive signal having a duty ratio in accordance with the difference between the target rotation angle and the current rotation angle of the shift drum 33, with the second rotation angle A2 of the shift drum 33 as the target rotation angle. Thus, at start of shifting, a drive signal having the maximum duty ratio (for example, 100%) is output. Then, when dog disengagement is completed, and the shift drum 33 starts rotating, the duty ratio of the drive signal decreases as the rotation angle of the shift drum 33 becomes closer to the second rotation angle A2.

At occurrence of dog abutment, the shift drum 33 stops rotating at the collision rotation angle AC. Accordingly, rotation of the shift actuator 9 and change in the duty ratio of the drive signal are also stopped. Thereafter, when dog abutment is released, the shift drum 33 starts rotating again to reach the second rotation angle A2. Accordingly, the rotation angle of the shift actuator 9 reaches the highest point, and the duty ratio of the drive signal becomes 0. With the above, normal control is completed.

Under normal control, the duty ratio of the drive signal has a positive value larger than 0 at a time when the rotation angle of the shift drum 33 reaches the collision rotation angle AC. Thus, at occurrence of dog abutment, the dog portions 39 are pressed onto each other by a drive force of the shift actuator 9.

Note that normal control is not limited to the above described manner as long as the duty ratio of a drive signal has a positive value larger than 0 at a time at which the rotation angle of the shift drum 33 reaches the collision rotation angle AC. For example, the duty ratio of a drive signal may be maintained at the maximum value all the time or decreased by a predetermined rate after elapse of a predetermined period of time.

For stop control indicated by the solid line D, the control device 10 keeps outputting a drive signal until the rotation angle of the shift drum 33 reaches a predetermined threshold AR, similar to the above described normal control. Thereafter, at a time at which the rotation angle of the shift drum 33 reaches the threshold AR, the control device 10 makes 0 the duty ratio of a drive signal to be supplied to the shift actuator 9. The threshold AR is defined within the range RB between the intermediate rotation angle AM and the collision rotation angle AC.

With the above, the shift actuator 9 rotates no longer, and driving the shift mechanism 40 by the shift actuator 9 is stopped. However, the shift drum 33 rotates to the second rotation angle A2 by a force with which the coil spring 48 presses the follower 47 onto the periphery of the segment 45 in the shift mechanism 40 despite absence of a drive force from the shift actuator 9.

As described above, under stop control, the duty ratio of a drive signal is 0 at a time at which the rotation angle of the shift drum 33 reaches the collision rotation angle AC. Thus, at occurrence of dog abutment, the dog portions 39 are not pressed onto each other by a drive force of the shift actuator 9.

In this embodiment, an example in which stop control is executed during a period of execution of automatic first gear level setting control is described. However, this is not limiting, and the stop control may be executed when the vehicle speed of the two-wheeled motor vehicle 1 or the engine rotation frequency falls below a predetermined threshold. Alternatively, the stop control may be executed when an engine torque calculated based on the engine rotation frequency and the throttle opening falls below a predetermined threshold.

In the above described embodiment, the control device 10 executes stop control to control the shift actuator 9 so as to stop driving the shift mechanism 40 after the shift drum 33 passes the intermediate rotation angle AM before reaching the collision rotation angle AC. Even though driving the shift mechanism 40 is stopped as described above, the shift drum 33 keeps rotating to the second rotation angle A2 by a force with which the coil spring 48 presses follower 47 onto the periphery of the segment 45. Thus, as the dog portions are not pressed onto each other by a drive force of the shift actuator 9, it is possible to complete dog engagement even though dog abutment is caused.

The control device 10 executes stop control during a period with execution of automatic first gear level setting control, which is executed when the vehicle speed of the two-wheeled motor vehicle 1 falls below a threshold. When the vehicle speed of the two-wheeled motor vehicle 1 is low, the difference in the rotation frequency when the idling gears 1h to 4h, 5i and the selector 36 to 38 are engaged with each other is relative low. Thus, it may be likely that pressing the dog portions 39 onto each other by a drive force of the shift actuator 9 at occurrence of dog abutment significantly delays establishment of dog engagement. In this view, it is preferable to execute stop control during a period with execution of the automatic first gear level setting control. Further, because of the same reason, stop control may be executed when at least one of the vehicle speed of the two-wheeled motor vehicle 1, the engine rotation frequency, and the engine torque falls below a threshold.

For normal control, the control device 10 keeps driving the shift mechanism 40 until after the rotation angle of the shift drum 33 reaches the collision rotation angle AC. When the difference in the normal frequency when the idling gears 1h to 4h, 5i and the selector 36 to 38 are engaged with each other is relatively high, it is unlikely that pressing the dog portions 39 onto each other by a drive force of the shift actuator 9 at occurrence of dog abutment delays establishment of dog engagement. Thus, it is preferable to execute normal control.

Although an embodiment of the present invention has been described in the above, the present invention, which is defined by the appended claims, is not limited to the above embodiment, and various modified embodiments are possible for a person skilled in the art.

## Claims

1. A transmission apparatus, comprising:
a gear unit (30) having
a drive shaft (31),
a driven shaft (32),
a plurality of gears (1i to 5i, 1h to 5h) each having a dog portion (32a,31a) and respectively mounted on the drive shaft (31) and the driven shaft (32) so as to be relatively rotatable but not movable in an axial direction, and
a plurality of selectors (36 to 38) each having a dog portion (39,36a,38a) and respectively mounted on the drive shaft (31) and the driven shaft (32) so as to be movable in the axial direction but not relatively rotatable, in which a pair of a gear and a selector of which dog portions are engaged with each other constitutes a driveline path extending from the drive shaft (31) to the driven shaft (32);
a shift drum (33) for switching pairs of the gear and the selector of which dog portions are engaged with each other by moving the selector in the axial direction;
a shift mechanism (40) for rotating the shift drum (33);
an actuator for driving the shift mechanism (40); and
a control device (10) for controlling the actuator,
wherein
the shift mechanism (40) has
a segment (45) having a plurality of mountain portions (454) and a plurality of valley portions (456) alternately formed along a periphery thereof, and mounted so as to integrally rotate with the shift drum (33),
a follower (47) in contact with the periphery of the segment (45), and
urging means (48) for urging the follower (47) onto a rotation axis of the segment (45),
a rotation angle (A1) of the shift drum (33) with the follower (47) positioned on the valley portion (456) formed on the periphery of the segment (45) constitutes a rotation angle at which dog portions (32a,31a;36a,38a) of a gear and a selector are engaged with each other, and
while the shift drum (33) rotates from the rotation angle (A1) at which dog portions (32a,31a;36a,38a) of a gear and of a selector relevant to a pair before shifting are engaged with each other to a rotation angle (A2) at which dog portions (32a,31a;36a,38a) of a gear and of a selector relevant to a pair after the shifting are engaged with each other, the control device (10) is configured to execute a stop control to stop the actuator after the rotation angle of the shift drum (33) passes a rotation angle (AM) with the follower (47) positioned on the mountain portion (454) formed on the periphery of the segment (45), **characterized in that** the control device (10) is configured to execute the stop control to stop the actuator during a period after the rotation angle of the shift drum (33) passes the rotation angle (AM) with the follower (47) positioned on the mountain portion (454) formed on the periphery of the segment (45) before the rotation angle reaches a collision rotation angle (AC) at which the dog portions (32a,31a;36a,38a) of the gear and the selector relevant to the pair after the shifting collide against each other.

2. The transmission apparatus according to claim 1, **characterized in that** the control device (10) is configured to execute gear level shifting control for sequentially shifting a gear level selected in the gear unit (30) toward a gear level with a maximum transmission gear ratio, when a vehicle speed falls below a threshold, and is configured to execute the stop control during a period with execution of the gear level shifting control.

3. The transmission apparatus according to claim 1 or 2, **characterized in that** the control device (10) is configured to execute the stop control when at least one of a vehicle speed, an engine rotation frequency, and an engine torque falls below a threshold.

4. The transmission apparatus according to any of claims 1 to 3, **characterized in that** the control device (10) is configured to execute a normal control to control the actuator so as to continue driving the shift mechanism (40) by means of the actuator until after the shift drum (33) reaches the collision rotation angle (AC), when not executing the stop control.

5. A vehicle having the transmission apparatus according to any of claims 1 to 4.

## Patentansprüche

1. Ein Getriebe-Gerät, das umfasst:
eine Getriebe-Einheit (30), die
eine antreibende Welle (31),
eine angetriebene Welle (32),
eine Mehrzahl von Zahnrädern (1i bis 5i, 1h bis 5h), jedes hat einen Klauenabschnitt (32a, 31a) und ist jeweils an der antreibenden Welle (31) und der angetriebenen Welle (32) montiert, so dass sie relativ drehbar, aber in der Axial-Richtung nicht bewegbar sind, und
eine Mehrzahl von Selektoren (36 bis 38), jeder hat einen Klauenabschnitt (39, 36a, 38a) und ist jeweils auf der antreibenden Welle (31) und der angetriebenen Welle (32) montiert, so dass sie in der Axial-Richtung bewegbar sind, aber nicht relativ drehbar, indem ein Paar von einem Zahnrad und einem Selektor, von denen die Klauenabschnitte miteinander in Eingriff sind, bilden einen Antriebslinien-Pfad, der sich von der antreibenden Welle (31) zu der angetriebenen Welle (32) erstreckt;
eine Schalt-Trommel (33), zum Schalten von Paaren von dem Zahnrad und dem Selektor, von dem die Klauenabschnitte in Eingriff miteinander sind, durch Bewegen des Selektors in der Axial-Richtung;
einen Schalt-Mechanismus (40), zum Drehen der Schalt-Trommel (33);
einen Aktuator, zum Antreiben des Schalt-Mechanismus (40); und
eine Steuer-Vorrichtung (10) zur Steuerung des Aktuators, hat,
wobei
der Schalt-Mechanismus (40)
ein Segment (45), das eine Mehrzahl von Berg-Abschnitten (454) und eine Mehrzahl von Tal-Abschnitten (456) hat, die abwechselnd entlang eines Umfangs derselben ausgebildet sind, und montiert ist, so dass es integral mit der Schalt-Trommel (33) dreht,
einen Folger (47) in Kontakt mit dem Umfang des Segments (45), und
Drück-Einrichtungen (48) zum Drücken des Folgers (47) auf eine Dreh-Achse des Segments (45), hat,
ein Dreh-Winkel (A1) der Schalt-Trommel (33) mit dem Folger (47), positioniert in dem Tal-Abschnitt (456), ausgebildet auf dem Umfang des Segments (45), bildet einen Dreh-Winkel, in dem Klauenabschnitte (32a, 31a; 36a, 38a) von einem Zahnrad und einem Selektor miteinander in Eingriff sind, und
während die Schalt-Trommel (33) von dem Dreh-Winkel (A1), zu dem die Klauenabschnitte (32a, 31a; 36a, 38a) von einem Zahnrad und von einem Selektor, relevant zu einem Paar vor dem Schalten in Eingriff miteinander sind, zu einem Dreh-Winkel (A2), zu dem die Klauenabschnitte (32a, 31a; 36a, 38a) von einem Zahnrad und einem Selektor, relevant für ein Paar nach dem Schalten in Eingriff miteinander sind, dreht, ist die Steuer-Vorrichtung (10) konfiguriert, um eine Stopp-Steuerung durchzuführen, um den Aktuator zu stoppen, nachdem der Dreh-Winkel der Schalt-Trommel (33) einen Dreh-Winkel (AM) passiert, mit dem Folger (47), positioniert an dem Berg-Abschnitt (454), der an dem Umfang des Segments (45) ausgebildet ist, **dadurch gekennzeichnet, dass** die Steuer-Vorrichtung (10) konfiguriert ist, um die Stopp-Steuerung auszuführen, um den Aktuator zu stoppen, während einer Periode, nachdem der Dreh-Winkel von der Schalt-Trommel (33) den Dreh-Winkel (AM) passiert hat, mit dem Folger (47) positioniert auf dem Berg-Abschnitt (454), ausgebildet an dem Umfang des Segments (45), bevor der Dreh-Winkel einen Kollisions-Dreh-Winkel (AC) erreicht, zu dem die Klauenabschnitte (32a, 31a; 36a, 38a) von dem Zahnrad und dem Selektor, relevant für das Paar nach dem Schalten, gegeneinander kollidieren.

2. Das Getriebe-Gerät gemäß Anspruch 1, **dadurch gekennzeichnet, dass** die Steuer-Vorrichtung (10) konfiguriert ist, um eine Stufen-Schalt-Steuerung auszuführen, zum sequenziellen Schalten einer Schalt-Stufe, ausgewählt in der Getriebe-Einheit (30) zu einer Schalt-Stufe mit einem maximalen Getriebe-Übersetzungs-Verhältnis, wenn eine Fahrzeug-Geschwindigkeit unter einen Grenzwert fällt, und ist konfiguriert, um die Stopp-Steuerung auszuführen, während einer Periode mit der Ausführung der Stufen-Schalt-Steuerung.

3. Das Getriebe-Gerät gemäß Anspruch 1 oder 2, **dadurch gekennzeichnet, dass** die Steuer-Vorrichtung (10) konfiguriert ist, um die Stopp-Steuerung auszuführen, wenn zumindest eines von einer Fahrzeug-Geschwindigkeit, einer Motor-Drehfrequenz, und einem Motor-Moment unter einen Grenzwert fallen.

4. Das Getriebe-Gerät gemäß zu irgendeinem der Ansprüche 1 bis 3, **dadurch gekennzeichnet, dass** die Steuer-Vorrichtung (10) konfiguriert ist, um eine Normal-Steuerung auszuführen, um den Aktuator zu steuern, so dass er den Antrieb des Schalt-Mechanismus (40) durch den Aktuator fortsetzt, bis nachdem die Schalt-Trommel (33) den Kollisions-Dreh-Winkel (AC) erreicht, wenn die Stopp-Steuerung nicht ausgeführt ist.

5. Ein Fahrzeug das ein Getriebe-Gerät gemäß zu irgendeinem der Ansprüche 1 bis 4 hat.

## Revendications

1. Appareil de transmission, comprenant :
une unité à engrenages (30) comportant
un arbre d'entraînement (31),
un arbre entraîné (32),
une pluralité d'engrenages (1i à 5i, 1h à 5h) comportant chacun une portion de crabot (32a, 31a) et montés respectivement sur l'arbre d'entraînement (31) et sur l'arbre entraîné (32) de manière à pouvoir tourner relativement mais à ne pas pouvoir se déplacer en direction axiale, et
une pluralité de sélecteurs (36 à 38) comportant chacun une portion de crabot (39, 36a, 38a) et montés respectivement sur l'arbre d'entraînement (31) et sur l'arbre entraîné (32) de manière à pouvoir se déplacer en direction axiale mais à ne pas pourvoir tourner relativement, dans laquelle une paire constituée par un engrenage et un sélecteur dont des portions de crabot sont engagées entre elles constitue une ligne de transmission qui s'étend de l'arbre d'entraînement (31) à l'arbre entraîné (32) ;
un tambour de changement de rapport (33) pour effectuer un changement de paires engrenage-sélecteur dont des portions de crabot sont engagées entre elles en déplaçant le sélecteur en direction axiale ;
un mécanisme de changement de rapport (40) pour faire tourner le tambour de changement de rapport (33) ;
un actionneur pour entraîner le mécanisme de changement de rapport (40) ; et
un dispositif de contrôle (10) pour contrôler l'actionneur,
dans lequel
le mécanisme de changement de rapport (40) comporte
un segment (45) comportant une pluralité de portions de montagne (454) et une pluralité de portions de vallée (456) formées alternativement sur sa périphérie, et montées de manière à tourner de manière intégrée avec le tambour de changement de rapport (33),
un élément suiveur (47) en contact avec la périphérie du segment (45), et
un moyen de poussée (48) pour pousser l'élément suiveur (47) sur un axe de rotation du segment (45),
l'angle de rotation (A1) du tambour de changement de rapport (33) avec l'élément suiveur (47) positionné sur la portion de vallée (456) formée sur la périphérie du segment (45) constitue un angle de rotation où les portions de crabot (32a, 31a ; 36a, 38a) d'un engrenage et d'un sélecteur sont engagées mutuellement, et
lorsque le tambour de changement de rapport (33) tourne de l'angle de rotation (A1) où les portions de crabot (32a, 31a ; 36a, 38a) d'un engrenage et d'un sélecteur relatifs à une paire avant un changement de rapport sont engagées mutuellement à l'angle de rotation (A2) où les portions de crabot (32a, 31a ; 36a, 38a) d'un engrenage et d'un sélecteur relatifs à une paire après le changement de rapport sont engagées mutuellement, le dispositif de contrôle (10) est configuré pour exécuter un contrôle d'arrêt afin d'arrêter l'actionneur après que l'angle de rotation du tambour de changement de rapport (33) a dépassé un angle de rotation (AM) avec l'élément suiveur (47) positionné sur la portion de montagne (454) formée sur la périphérie du segment (45),
**caractérisé en ce que** le dispositif de contrôle (10) est configuré pour exécuter le contrôle d'arrêt pour arrêter l'actionneur durant une période après que l'angle de rotation du tambour de changement de rapport (33) a dépassé l'angle de rotation (AM) avec l'élément suiveur (47) positionné sur la portion de montagne (454) formée sur la périphérie du segment (45) avant que l'angle de rotation n'atteigne un angle de rotation de collision (AC) où les portions de crabot (32a, 31a ; 36a, 38a) de l'engrenage et du sélecteur relatifs à la paire après le changement de rapport entrent en collision mutuelle.

2. Appareil de transmission selon la revendication 1, **caractérisé en ce que** le dispositif de contrôle (10) est configuré pour exécuter un contrôle de changement de rapport du niveau d'engrenage pour effectuer séquentiellement un changement de rapport à un niveau d'engrenage sélectionné dans l'unité à engrenages (30) vers un niveau d'engrenage avec un rapport d'engrenages de transmission maximal, quand la vitesse du véhicule tombe sous un seuil, et est configuré pour exécuter le contrôle d'arrêt durant une période avec l'exécution du contrôle de changement de rapport de niveau d'engrenage.

3. Appareil de transmission selon la revendication 1 ou 2, **caractérisé en ce que** le dispositif de contrôle (10) est configuré pour exécuter le contrôle d'arrêt quand au moins un paramètre parmi la vitesse du véhicule, la fréquence de rotation du moteur et le couple du moteur tombe sous un seuil.

4. Appareil de transmission selon l'une quelconque des revendications 1 à 3, **caractérisé en ce que** le dispositif de contrôle (10) est configuré pour exécuter un contrôle normal pour contrôler l'actionneur de manière à continuer l'entraînement du mécanisme de changement de rapport (40) à l'aide de l'actionneur jusqu'après que le tambour de changement de rapport (33) a atteint l'angle de rotation de collision (AC), quand le contrôle d'arrêt n'est pas exécuté.

5. Véhicule comportant l'appareil de transmission selon l'une quelconque des revendications 1 à 4.
